## Europäisches Patentamt

## European Patent Office

## Office européen des brevets

(11) Numéro de publication: **0 003 695**
**B1**

(12) **FASCICULE DE BREVET EUROPEEN**

(45) Date de publication du fascicule de brevet: **16.09.81**

(51) Int. Cl.³: **B 29 D 11/02, B 29 C 1/00**

(21) Numéro de dépôt: **79400052.1**

(22) Date de dépôt: **25.01.79**

(54) Dispositif de moulage, pour lentille de contact souple.

(30) Priorité: **07.02.78 FR 7803323**

(43) Date de publication de la demande:
**22.08.79 Bulletin 79/17**

(45) Mention de la délivrance du brevet:
**16.09.81 Bulletin 81/37**

(84) Etats Contractants Désignés:
**BE CH DE FR GB IT NL**

(56) Documents cités:
**FR - A - 957 349**
**FR - A - 1 071 974**
**FR - A - 2 075 679**
**US - A - 3 881 683**

(73) Titulaire: **ESSILOR INTERNATIONAL Cie Générale d'Optique**
**1 Rue Thomas Edison Echat 902**
**F-94028 Creteil Cedex (FR)**

(72) Inventeur: **Bourset, Claude**
**3/21 Allée Jean Poncelet**
**F-94000 Creteil (FR)**
Inventeur: **Lenne, William**
**46 Avenue Henri Barbusse**
**F-93220 Gagny (FR)**

(74) Mandataire: **Foldès, Georges et al,**
**CABINET J. BONNET THIRION 95 Bd.**
**Beaumarchais**
**F-75003 Paris (FR)**

Courier Press, Leamington Spa, England.

## Dispositif de moulage, pour lentille de contact souple

La présente invention concerne d'une manière générale le moulage des lentilles de contact en matière souple.

Ainsi qu'on le sait une lentille de contact doit répondre à trois impératifs fonctionnels.

Le premier correspond à la correction optique qu'elle doit assurer; c'est le rôle de sa zone centrale.

Le deuxième correspond à la bonne adaptation dont elle doit être l'objet pour l'usager; au moins une zone dite de dégagement, plus ou moins étendue, est usuellement prévue à cet effet à sa périphérie, autour de sa zone centrale, cette zone de dégagement devant former avec l'oeil de l'usager un volume en coin propre à faciliter l'introduction sous la lentille de contact concernée d'un film lacrymal neuf à chaque battement de paupière dudit usager, ce qui est garant de la bonne adaptation recherchée.

Le troisième impératif fonctionnel auquel doit répondre une lentille de contact a trait au confort de l'usager, notamment au passage de la paupière de celui-ci sur une telle lentille; c'est le rôle du bord périphérique de cette lentille que d'assurer par sa géométrie un tel confort.

Actuellement, les premier et troisième des impératifs fonctionnels succinctement rappelés ci-dessus peuvent être respectés de manière généralement satisfaisante.

Pour le deuxième de ces impératifs fonctionnels, celui ayant trait à la bonne adaptation à obtenir, le problème est par contre différent.

S'agissant de lentilles de contact en matière rigide, la réalisation d'une zone de dégagement à la périphérie de la face concave de la lentille ne pose aucun problème particulier, car l'on procède par usinage.

Tel est le cas également des lentilles de contact en matière souple lorsque la matière constitutive de celle-ci est hydrophile; ces lentilles peuvent être usinées à l'état sec, selon les méthodes d'usinage classiques mises en oeuvre pour les lentilles en matière rigide; le produit connu sous la dénomination "HEMA" (hydroxyéthyl-méthacrylate) est l'un de ces matériaux souples hydrophiles pouvant être usinés à l'état sec.

Par contre, pour les lentilles de contact en matière souple hydrophobe, telle qu'un caoutchouc de silicone, l'usinage ne peut se faire que si l'on utilise des artifices de rigidification temporaire, centrifugation ou réfrigération, qui sont difficilement applicables de manière industrielle.

Pour les lentilles de contact en une telle matière, on procède par moulage entre deux matrices, l'une concave, l'autre convexe.

Dans le brevet français déposé sous le No 70 37579 et publié sous le No 2.109.470, il a été précisément proposé un dispositif propre à un moulage direct d'une telle lentille de contact en matière souple au profil final d'utilisation désiré pour celle-ci; toute reprise d'usinage pour une telle lentille, toujours difficile à exécuter pour les raisons rappelées ci-dessus, se trouve ainsi avantageusement évitée.

En pratique, dans le dispositif de moulage décrit dans ce brevet français, un joint annulaire est mis en oeuvre, qui établit une jonction entre les matrices de moulage concernées, à la périphérie de celles-ci, et qui coopèrent avec ces matrices de moulage pour la définition d'une cavité de moulage correspondant à la lentille recherchée.

Un tel joint intéresse donc aussi bien la face convexe d'une lentille que sa face concave: il a en section un profil en doigt de gant s'étendant entre deux circonférences de diamètres sensiblement égaux, l'une qui appartient à l'une des matrices de moulage, l'autre qui appartient à l'autre de ces matrices de moulage, et il vient à épaisseur quasi nulle se fondre tangentiellement avec ces matrices de moulage le long des circonférences correspondantes en question.

Cette disposition a donné et donne encore satisfaction.

Elle présente cependant des inconvénients, qui sont les suivants.

Tout d'abord, du fait de son profil aigu nécessaire à son raccordement tangentiel aux matrices de moulage, un tel joint annulaire n'est pas toujours aisé à réaliser, et son raccordement tangentiel aux matrices de moulage ne se fait pas toujours avec toute la régularité souhaitable.

En outre, et surtout, un tel joint à section en doigt de gant ne se prête pas à la réalisation de la zone de dégagement que, pour les raisons exposées, ci-dessus, les lentilles de contact doivent de préférence présenter à leur périphérie, sur leur face concave.

Cette zone de dégagement ne pouvant être obtenue au moyen du joint annulaire précité, on pourrait penser pouvoir l'obtenir par réalisation, sur la matrice convexe, d'une forme complémentaire. Mais, il y a, au moins actuellement, surtout s'agissant d'une zone optiquement utile, une grande difficulté pratique, voire même une certaine impossibilité, à usiner et polir une matrice de moulage convexe présentant une arête circulaire en creux, arête qui correspond à l'intersection de la zone centrale de la lentille de contact à obtenir avec la zone de dégagement périphérique de celle-ci.

La présente invention a d'une manière générale pour objet un dispositif de moulage pour lentilles de contact souples, qui rend aisée la réalisation, à la périphérie de celles-ci, de toute zone de dégagement souhaitée pour une bonne adaptation de ces lentilles, sur la face concave de celles-ci, et qui présente en outre d'autres avantages.

Le dispositif de moulage pour lentilles de contact suivant l'invention, qui est du genre comportant une cavité de moulage définie conjointement par, d'une part, deux matrices de moulage, l'une concave, l'autre convexe, qui sont disposées en regard l'une de l'autre, et, d'autre part, un joint annulaire, qui établit une jonction entre les matrices de moulage à la périphérie de celles-ci, est d'une manière générale caractérisé en ce que le bord périphérique de plus grand diamètre de ladite cavité de moulage est défini par le contact d'une arête de fermeture avec une surface d'appui, ladite arête de fermeture appartenant à l'un quelconque des organes matrice de moulage concave-joint annulaire, tandis que ladite surface d'appui appartient à l'autre de ces organes.

Bien que l'arête de fermeture puisse appartenir au joint annulaire et la surface d'appui à la matrice de moulage concave, c'est, de préférence, la solution inverse qui est retenue, l'arête de fermeture appartenant à la matrice de moulage concave et la surface d'appui au joint annulaire.

Dans ce cas, le diamètre de la périphérie de la lentille est rigoureusement défini par une arête rigide de la matrice de moulage concave, ce qui est garant d'une grande rigueur dans l'obtention de ce diamètre, et, donc, d'une bonne fidélité dans les caractéristiques géométriques des lentilles obtenues.

L'originalité de cette disposition apparaîtra mieux si l'on souligne que, avec le joint à profil en doigt de gant du dispositif de moulage décrit dans le brevet français No 2.109.470 mentionné ci-dessus, c'est le fond de la gorge que présente un tel joint qui définit le bord périmétrique de la lentille, et que c'est donc de ce seul joint que dépend le diamètre extérieur final de celle-ci.

Quoi qu'il en soit, grâce au dispositif de moulage suivant l'invention, le joint mis en oeuvre permet à lui seul d'assurer la réalisation de la zone de dégagement nécessaire à l'obtention pour les lentilles de contact concernées de bonnes qualités d'adaptation.

Il est en outre avantageusement possible de donner à cette zone de dégagement tout profil désiré, en sorte que, pour de mêmes caractéristiques optiques, le praticien adaptateur peut avantageusement disposer de toute une gamme de lentilles de contact se distinguant les unes des autres par le profil de leur zone de dégagement et choisir parmi celles-ci la mieux appropriée à une bonne adaptation à un patient déterminé.

De préférence, la surface du joint annulaire participant à la définition de la cavité de moulage pour l'obtention de cette zone de dégagement, est formée par un tronçon de surface unique appartenant exclusivement à l'une quelconque des surfaces géométriques simples suivantes: plan, cône, sphère, tore, ou par une succession de tels tronçons de surface.

Il va de soi cependant que la surface en question du joint annulaire peut avoir tout autre profil désiré, et par exemple un profil courbe à variations progressives de courbure.

Selon une première forme de mise en oeuvre de l'invention, le joint forme une pièce distincte de la matrice de moulage convexe, et peut par exemple enserrer celle-ci.

En variante, il peut faire corps avec cette matrice de moulage convexe et ne former donc qu'une seule et même pièce avec celle-ci; dans ce cas, une telle pièce est réalisée par moulage à partir d'une matrice concave, étant rappelé que, si l'usinage d'une surface convexe est pratiquement impossible, il n'en est pas de même d'une surface concave, et que, de ce fait, la réalisation, sur la matrice concave de départ, de la zone de dégagement recherchée, ne soulève pas de difficulté.

Les caractéristiques et avantages de l'invention ressortiront d'ailleurs de la description que va suivre, à titre d'exemple, en référence aux dessins schématiques annexés sur lesquels:

la figure 1 est une vue en coupe axiale d'une lentille de contact au moulage de laquelle le dispositif de moulage suivant l'invention peut avantageusement s'appliquer;

la figure 2 est une vue en coupe axiale de ce dispositif de moulage;

la figure 3 reprend à échelle supérieure un détail de la figure 2 repéré par un encart III sur celle-ci;

les figures 4 à 6 sont des vues analogues à celle de la figure 3 et concernent chacune respectivement une variante de réalisation;

la figure 7 est une vue analogue à celle de la figure 2 et concerne une autre variante de réalisation;

la figure 8 est une vue analogue à celle de la figure 3 et concerne une autre variante de réalisation;

la figure 9 est une vue analogue à celle de la figure 7 et concerne une autre variante de réalisation;

la figure 10 est une vue en coupe axiale illustrant le moulage du joint suivant l'invention pour cette dernière variante de réalisation;

la figure 11 est une vue analogue à celle de la figure 3 et concerne une autre variante de réalisation.

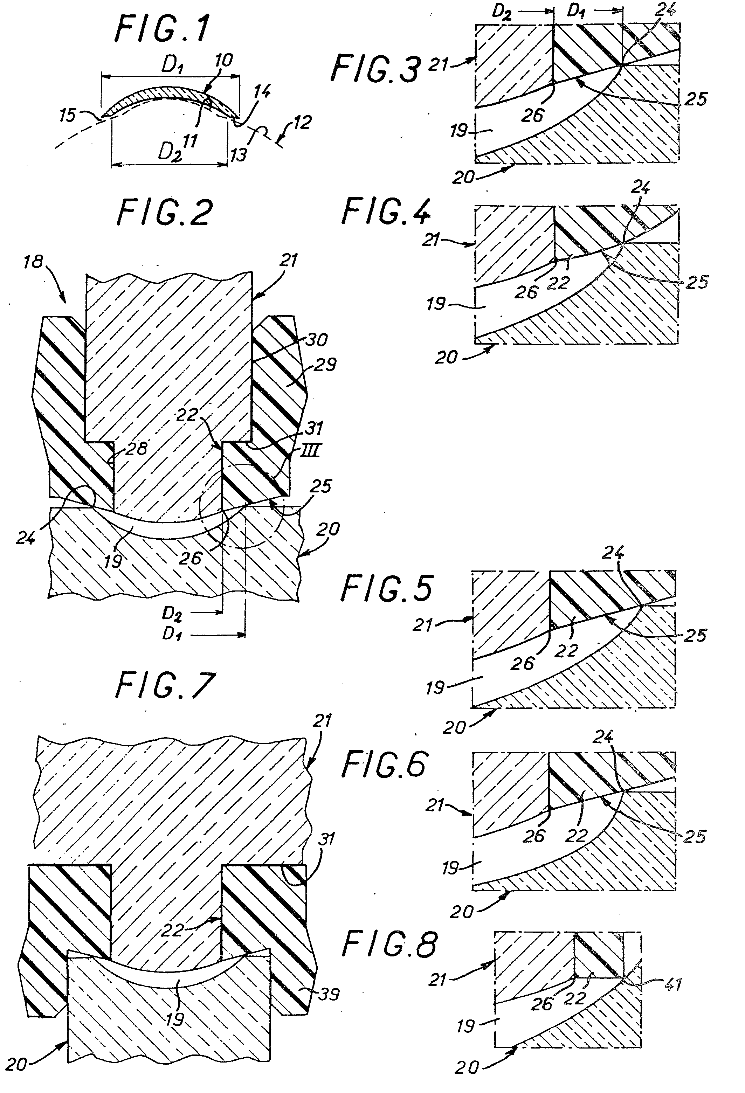

A la figure 1, on reconnaît, sous la référence générale 10, une lentille de contact; tel qu'illustré en traits interrompus, il s'agit d'une lentille destinée à être appliquée directement à la cornée 11 de l'oeil 12 d'un patient.

Dans l'exemple de réalisation représenté, cette lentille de contact 10 doit, par son bord périphérique, porter sur la zone sclérale 13 de l'oeil 12.

Il est avantageux, dans ce cas, pour un bon renouvellement du film lacrymal sous la lentille 10 à chaque battement de paupière, que cette lentille 10 présente, globalement, du côté de sa face concave, à la périphérie de celle-ci, une zone de dégagement en biais 14, propre à former, avec la zone sclérale 13 de l'oeil 12, un volume en coin 15; dans l'exemple de réalisation représenté, cette zone de dégagement 14 s'étend entre la circonférence de diamètre hors tout $D_1$ de la lentille et une circonférence de diamètre $D_2$ délimitant la zone centrale, optiquement active, de celle-ci.

C'est de cette zone de dégagement 14 que dépendent pour partie au moins les qualités d'adaptation de la lentille 10, c'est-à-dire la faculté pour le patient d'accepter avec une bonne tolérance cette lentille.

C'est également cette zone de dégagement 14 dont la réalisation présente des difficultés.

Le dispositif de moulage suivant l'invention, dont une forme de réalisation est désignée par la référence générale 18 à la figure 2, permet d'éliminer ces difficultés.

De manière connue en soi, le dispositif de moulage 18 suivant l'invention comporte une cavité interne de moulage 19 définie conjointement par, d'une part, deux matrices de moulage 20, 21, l'une à surface de moulage concave, l'autre à surface de moulage convexe, qui sont disposées en regard l'une de l'autre, et d'autre part, un joint annulaire 22, qui établit une jonction entre les matrices de moulage 20, 21 à la périphérie des surfaces de moulage de celles-ci.

Suivant l'invention, le bord périphérique de plus grand diamètre de la cavité de moulage 19 est défini par le contact d'une arête de fermeture avec une surface d'appui, ladite arête de fermeture appartenant à l'un quelconque des organes matrice de moulage concave 20-joint annulaire 22, tandis que ladite surface d'appui appartient à l'autre de ces organes.

Dans l'exemple de réalisation illustré par les figures 2 et 3, l'arête de fermeture, qui porte la référence 24, appartient à la matrice de moulage concave 20 et définit la périphérie de la surface de moulage de celle-ci, tandis que la surface d'appui correspondante, qui porte la référence générale 25, appartient au joint annulaire 22.

Dans l'exemple de réalisation représenté sur les figures 2 et 3, la surface d'appui 25 s'étend à partir d'une arête 26, qui en forme la périphérie interne et par laquelle elle se raccorde, tangentiellement ou non, avec la périphérie externe de la surface de moulage de la matrice de moulage convexe 21, et se prolonge radialement au-delà de l'arête de fermeture 24; c'est donc au joint annulaire 22 qu'il revient de former la zone de dégagement 14 recherchée pour la lentille de contact à mouler.

En outre, dans l'exemple de réalisation représenté sur les figures 2 et 3, la surface d'appui 25 est globalement tronconique, en sorte que la surface du joint annulaire 22 participant à la définition de la cavité de moulage 19, c'est-à-dire la partie de la surface d'appui 25 de ce joint qui se trouve délimité par les périphéries interne et externe des surfaces de moulage des matrices de moulage 19, 20, est toute entière formée par un tronçon de surface unique appartenant à une surface géométrique simple, à savoir, en l'espèce un cône; dans l'exemple de réalisation représenté à la figure 4, il s'agit, en variante, d'un tore.

Mais il n'en est pas obligatoirement ainsi.

Au contraire, une telle surface peut être formée par une succession de tels tronçons de surfaces géométriques simples.

Diverses variantes de réalisation peuvent être envisagées, aussi bien en ce qui concerne la nature des surfaces géométriques simples mises en oeuvre pour la définition de la surface en question, qui peuvent être également des sphères ou des plans, qu'en ce qui concerne le nombre de tronçons successifs d'une telle surface.

En outre celle-ci peut être à profil courbe quelconque.

Quoi qu'il en soit, suivant une caractéristique de l'invention, la surface du joint annulaire 22 participant à la définition de la cavité de moulage 19, qui corrspond à la formation de la zone de dégagement 14 pour la lentille 10 recherchée, s'étend entre deux circonférences 26, 24 de cette cavité de moulage, qui, conjointement, d'une part appartiennent l'une à la matrice de moulage 20, l'autre à la matrice de moulage 21, en formant la périphére des surfaces de moulage correspondantes, et, d'autre part, sont de diamètres $D_1$, $D_2$ différents.

Cette caractéristique distingue le joint annulaire 22 du dispositif de moulage 18 suivant l'invention aussi bien, comme mentionné ci-dessus, du joint annulaire mis en oeuvre dans le dispositif de moulage décrit dans le brevet français No 2.109.470 que des joints annulaires mis en oeuvre dans les dispositifs usuels de moulage à deux matrices de moulage, dont la surface participant à la définition de la cavité de moulage correspondante est globalement cylindrique et s'étend donc entre deux circonférences de même diamètre de ces matrices de moulage.

Dans l'exemple de réalisation représenté à la figure 2, le joint annulaire 22, qui forme une pièce distincte de la matrice de moulage convexe 21, enserre directement par lui-même cette matrice de moulage convexe 21 et est engagé à cet effet à force sur une portée cylindrique 28 de celle-ci.

En outre, ce joint annulaire 22 est solidaire d'une jupe 29 qui est aussi engagée sur la matrice de moulage convexe 21, à la faveur d'une portée cylindrique 30 de celle-ci de diamètre supérieur à celui de la portée cylindrique 28 précédente, ces portées 28 et 30 étant séparées l'une de l'autre par un épaulement transversal 31 de la matrice de moulage convexe 21 contre lequel prend appui le joint 22.

Ainsi, dans ce cas, le joint annulaire 22 est exclusivement solidaire de la matrice de moulage convexe 21, bien que formant une pièce distincte de celle-ci.

Après dépôt dans la surface de moulage de la matrice de moulage concave 20 d'une quantité légèrement surabondante de matière à mouler, la matrice de moulage convexe 21 porteuse du joint 22 est rapprochée de la matrice de moulage concave 20 jusqu'à contact de la surface d'appui 25 du joint 22 avec l'arête de fermeture 24 formant la périphérie de la surface de moulage de la matrice de moulage concave 20.

En pratique, le mouvement d'engagement l'une par rapport à l'autre des matrices de moulage 20, 21 est réglé de manière à ce que les zones centrales des surfaces de moulage en cause soient séparées l'une de l'autre par la distance correspondant à l'épaisseur de la lentille à obtenir, avec une très légère pénétration de l'arête de fermeture 24 dans le joint 22, compte tenu de la relative souplesse du matériau constitutif de celui-ci, et sans poinçonnement notable de ce joint.

Ainsi que l'illustre la figure 5, un même type de joint peut servir au moulage de lentilles de diamètres différents.

Il suffit alors en effet de prendre une matrice de moulage concave 20 adaptée au diamètre $D_1$ à obtenir pour une telle lentille, ce diamètre étant celui défini par l'arête de fermeture 24 que comporte une telle matrice de moulage concave.

La surface de moulage de cette matrice de moulage concave n'est pas nécessairement à rayon de courbure unique; au contraire, et tel qu'illustré par les figures, et plus particulièrement par la figure 6, au voisinage de son arête de fermeture 24, le rayon de courbure de sa surface de moulage peut progressivement diminuer.

Suivant la variante de réalisation illustrée par la figure 7, le joint annulaire 22 est, comme précédemment, solidaire d'une jupe 39, mais celle-ci est engagée sur la matrice de moulage concave 20, à la faveur d'une portée cylindrique 40 de cette matrice de moulage.

Ainsi, l'ensemble du joint 22 et de la jupe 39 dont est solidaire ce dernier assure un centrage relatif l'une par rapport à l'autre des matrices de moulage 20, 21.

En outre, l'épaulement transversal 31 de la matrice de moulage convexe 21 contre lequel il prend appui peut aisément être rectifié si nécessaire, en vue d'un ajustement en hauteur du joint 22 vis-à-vis de la surface de moulage de cette matrice de moulage convexe 21 pour une bonne continuité de la surface d'appui 25 avec cette surface de moulage.

Suivant la variante de mise en oeuvre de l'invention schématiquement illustrée par la figure 8, c'est au joint 22 qu'appartient l'arête de fermeture de la cavité de moulage 19, cette arête de fermeture étant formée par le bord périphérique 41 de ce joint 22, tandis que la surface d'appui contre laquelle elle doit porter appartient à la matrice de moulage concave 20 et est par exemple, tel que représenté, en continuité avec celle-ci.

Dans ce qui précède, le joint 22 forme une pièce individuelle.

Un tel joint est avantageusement susceptible d'être moulé, en matière synthétique par exemple, en particulier polyamide ou polycarbonate, tandis que les matrices de moulage 20, 21 auxquelles il est associé peuvent être l'une et l'autre en matière susceptible d'être polie par usinage, métal ou verre par exemple, et en particulier verre "PYREX".

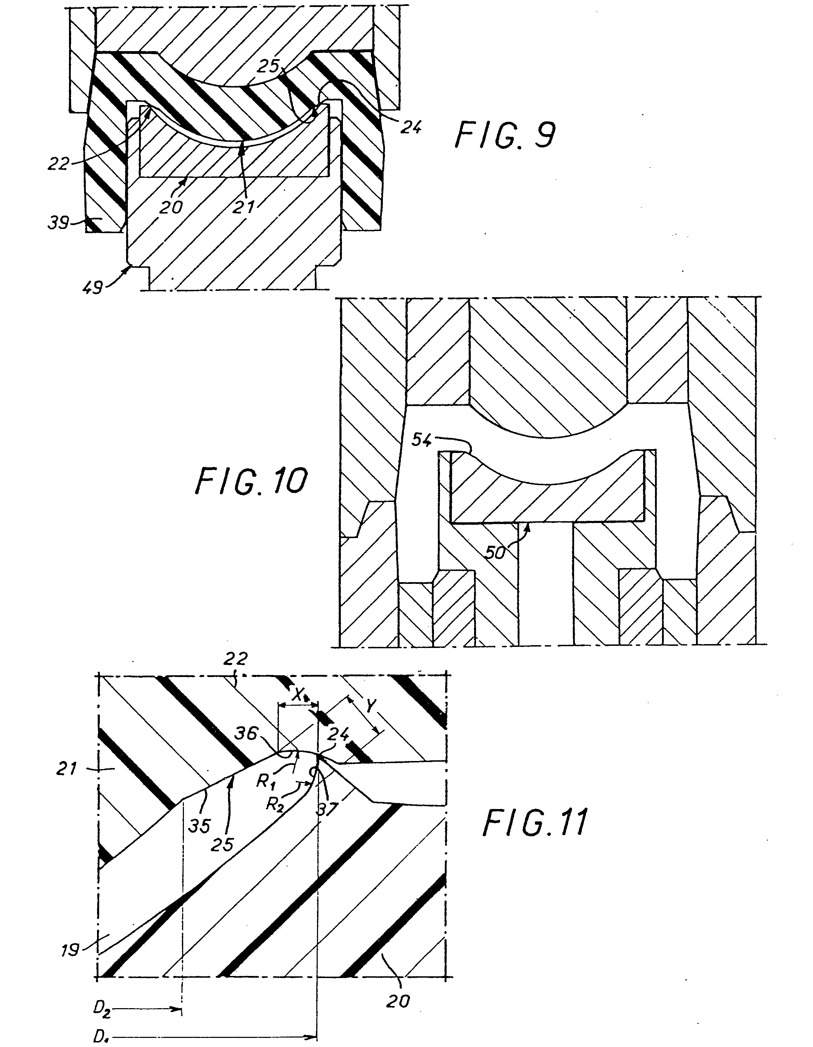

Mais, en variante, et tel qu'illustré par les figures 9 et 10, le joint 22 peut faire corps avec la matrice de moulage convexe 21 et ne former donc avec celle-ci qu'une seule et même pièce avantageusement susceptible d'être moulée d'un seul tenant en une matière synthétique du type de celle mentionnée ci-dessus.

Le moulage d'une telle pièce ne soulève pas de difficulté particulière, puisque la matrice de moulage 50 utilisée pour obtenir la surface de cette pièce correspondant à la face concave de la lentille recherchée, est elle-même concave, figure 10, et qu'il est donc possible d'y usiner la zone de dégagement 54 nécessaire.

Dans l'exemple de réalisation représenté, le joint 22 est en outre solidaire, comme précédemment, d'une jupe 39 par laquelle il peut être engagé sur la matrice de moulage concave 20, ou, comme en l'espèce, sur une pièce 49 servant de support à celle-ci.

Il va de soi que l'on continue ici à désigner par "joint annulaire 22" la partie de la pièce correspondante à laquelle il revient de former, comme précédemment, la zone de dégagement recherchée pour la lentille à mouler.

A la figure 9, la surface d'appui 25 d'un tel joint annulaire est, au droit de l'arête de fermeture 24, globalement convexe.

Suivant la forme de réalisation de la figure 11, la surface d'appui 25 comporte successivement, à compter du diamètre $D_2$ précisé ci-dessus, une première zone 35, qui est destinée à former l'essentiel de la zone de dégagement de la lentille à mouler, et qui est par exemple globalement conique ou globalement convexe à rayon de courbure élevé, puis, au droit de l'arête de fermeture 24, une deuxième zone 36, qui est destinée à contribuer à la formation du bord de la lentille, et qui est globalement concave.

De préférence cette zone concave 36 est torique, et l'arête de fermeture 24 est elle-même formée en bout d'une zone concave torique 37 de la matrice de moulage 20 ayant un méridien de rayon $R_2$ sensiblement égal à celui $R_1$ de la zone concave 36 de la surface d'appui 25.

En pratique, les dispositions sont telles que, lorsque la cavité de moulage 19 est fermée, tel que représenté, l'arête de fermeture se trouve sensiblement à mi-épaisseur de la zone de cette cavité de moulage globalement intéressée par les zones concaves toriques 36 et 37.

Le bord périphérique de la lentille obtenue se trouve ainsi avoir avantageusement un profil en ogive de nature à assurer un bon confort à l'usager.

En pratique la zone de la cavité de moulage 19 globalement intéressée par les zones concaves toriques 36, 37 a une extension radiale X réduite à une fraction, de l'ordre de 1/100 par exemple, du diamètre hors tout $D_1$.

Par exemple, pour un diamètre $D_1$ compris entre 10 et 12mm, cette extension radiale X est de l'ordre de 0,1 mm; conjointement l'épaisseur Y correspondante, mesurée à la racine des zones concaves toriques 36, 37, est comprise entre 0,05 et 0,08 mm, suivant le type de lentille à obtenir, et les rayons $R_1$, $R_2$ compris entre 0,15 et 0,40 mm.

Mais ces valeurs numériques ne doivent en rien être considérées comme limitatives de l'invention.

Par ailleurs, dans la forme de réalisation représentée à la figure 11, la matrice de moulage 20 est elle aussi en matière synthétique, ce qui suppose l'usinage suivant une arête d'une matrice de moulage convexe, mais, s'agissant d'une zone périphérique pour la lentille à mouler, et donc d'une zone extérieure à la zone optiquement utile, aucun polissage n'est nécessaire, et un tel usinage peut en pratique être assuré dans des conditions convenables, par exemple à l'aide d'un outil diamant.

La présente invention ne se limite bien entendu pas aux formes de mise en oeuvre décrites et représentées, mais englobe toute variante notamment en ce qui concerne le profil de la surface du joint 22 participant à la définition de la cavité annulaire 19 pour la constitution de la zone de dégagement recherchée pour les lentilles à mouler.

D'ailleurs, la présente invention trouve sans difficulté son application quelle que soit la configuration de la lentille à mouler, même s'il s'agit d'une lentille torique ou bitorique.

Elle s'applique également dans le cas où une zone de dégagement doit aussi être prévue sur la face convexe de la lentille concernée: la matrice de moulage concave correspondante peut aisément être usinée en conséquence.

**Revendications**

1. Dispositif de moulage pour lentille de contact souple, du genre comportant une cavité interne de moulage (19) définie conjointement par, d'une part, deux matrices de moulage, l'une concave (20), l'autre convexe (21), qui sont disposées en regard l'une de l'autre, et, d'autre part, un joint annulaire (22), qui établit une jonction entre les matrices de moulage à la périphérie de celles-ci, caractérisé en ce que le bord périphérique de plus grand diamètre ($D_1$)

de ladite cavité de moulage (19) est défini par le contact d'une arête de fermeture (24) avec une surface d'appui (25), ladite arête de fermeture (24) appartenant à l'un quelconque des organes matrice de moulage concave (20)-joint annulaire (22), tandis que ladite surface d'appui (25) appartient à l'autre desdits organes.

2. Dispositif de moulage suivant la revendication 1, caractérisé en ce que l'arête de fermeture (24) appartient à la matrice de moulage concave (20) et la surface d'appui (25) au joint annulaire (22).

3. Dispositif de moulage suivant l'une quelconque des revendications 1, 2, caractérisé en ce que la surface d'appui (25) se prolonge radialement au-delà de l'arête de fermeture (24).

4. Dispositif de moulage suivant l'une quelconque des revendications 1 à 4, caractérisé en ce que, au droit de l'arête de fermeture (24), la surface d'appui (25) comporte une zone concave (36).

5. Dispositif de moulage suivant la revendication 4, caractérisé en ce que la zone concave (36) de la surface d'appui (25) est torique, et l'arête de fermeture (24) est elle-même formée en bout d'une zone concave torique (37) ayant un méridien de rayon ($R_2$) sensiblement égal à celui ($R_1$) du méridien de la zone concave torique (36) de la surface d'appui (25).

6. Dispositif de moulage suivant l'une quelconque des revendications 1 à 5, caractérisé en ce que la surface du joint annulaire (22) participant à la définition de la cavité de moulage (19) est formée par un tronçon de surface unique appartenant exclusivement à l'une quelconque des surfaces géométriques simples suivantes: plan, cône, sphère, tore, ou par une succession de tels tronçons de surface.

7. Dispositif de moulage suivant l'une quelconque des revendications 1 à 6, dans lequel la surface du joint annulaire (22) participant à la définition de la cavité de moulage (19) s'étend entre deux circonférences ($D_1$, $D_2$) de cette cavité de moulage (19), caractérisé en ce que, conjointement, d'une part, lesdites circonférences appartiennent, l'une, à l'une des matrices de moulage (20, 21), l'autre, à l'autre de celles-ci, et d'autre part, elles sont de diamètres différents.

8. Dispositif de moulage suivant l'une quelconque des revendications 1 à 7, caractérisé en ce que le joint annulaire (22) enserre directement par lui-même la matrice de moulage convexe (21).

9. Dispositif de moulage suivant la revendication 8, caractérisé en ce que le joint annulaire (22) est solidaire d'une jupe (29) qui est aussi engagée sur la matrice de moulage convexe.

10. Dispositif de moulage suivant l'une quelconque des revendications 1 à 7, caractérisé en ce que le joint annulaire (22) fait corps avec la matrice de moulage convexe (21) et ne forme qu'une seule et même pièce avec celle-ci.

11. Dispositif de moulage suivant l'une quelconque des revendications 8, 9, caractérisé en ce que le joint annulaire (22) est solidaire d'une jupe (39) qui est engagée sur la matrice de moulage concave.

## Claims

1. Moulding device for flexible contact lenses of the type comprising an internal moulding cavity (19) defined conjointly, on the one hand, by two moulding dies, one concave (20), the other convex (21), which are disposed facing each other, and on the other hand, by an annular seal (22) which establishes a junction between the moulding dies at the peripheries thereof, characterised in that the larger diameter $(D_1)$ peripheral edge of the said moulding cavity (19) is defined by the contact of a closure ridge (24) with a bearing surface (25), the said closure ridge (24) belonging to either one of the concave moulding die (20) — annular seal (22) members, whereas the said bearing surface (25) belongs to the other of the said members.

2. Moulding device according to claim 1, characterised in that the closure ridge (24) belongs to the concave moulding die (20) and the bearing surface (25), to the annular seal (22).

3. Moulding device according to claim 1 or 2, characterised in that the bearing surface (25) extends radially beyond the closure ridge (24).

4. Moulding device according to any one of claims 1 to 4, characterised in that, in line with the closure ridge (24), the bearing surface comprises a concave zone (36).

5. Moulding device according to claim 4, characterised in that the concave zone (36) of the bearing surface (25) is toric, and the closure ridge (24) is itself formed at the end of a toric concave zone (37) having a meridian of radius $(R_2)$ substantially equal to that $(R_1)$ of the meridian of the toric concave zone (36) of the bearing surface (25).

6. A moulding device according to any one of claims 1 to 5, characterised in that the surface of the annular seal (22) participating in the definition of the moulding cavity (19) is formed by a single surface section belonging exclusively to any one of the following types of simple geometrical surfaces: plane, cone, sphere, torus, or by any succession of such surface sections.

7. Moulding device according to any one of claims 1 to 6, in which the surface of the annular seal (22) participating in the definition of the moulding cavity (19) extends between two circumferences $(D_1, D_2)$ of this moulding cavity (19), characterised in that, conjointly, on one hand, one of the said circumferences belongs to one of the moulding dies (20, 21), the other, to the other thereof, and on the other hand, they are of different diameters.

8. Moulding device according to any one of claims 1 to 7, characterised in that the annular seal (22) directly embraces by itself the convex moulding die (21).

9. Moulding device according to claim 8, characterized in that the annular seal (22) is integral with a skirt (29) which is also engaged on the convex moulding die.

10. Moulding device according to any one of claims 1 to 7, characterised in that the annular seal (22) is part of convex moulding die (21) and forms one and the same part therewith.

11. Moulding device according to one claim 8 or 9, characterised in that the annular seal (22) is integral with a skirt (39) which is engaged on the concave moulding die.

## Patentansprüche

1. Formvorrichtung für weiche Kontaktlinsen mit einem inneren Formhohlraum (19), der gemeinsam einerseits durch zwei Formmatrizen, einer konkaven (20) und einer konvexen (21), die einander gegenüberstehend angeordnet sind, und andererseits durch einen Schließ- oder Dichtungsring (22) gebildet wird, welcher eine Verbindung zwischen den Formmatrizen an deren Umfang bildet, dadurch gekennzeichnetp, daß der Umfangsrand $(D_1)$ mit größtem Durchmesser dieses Formhohlraumes (19) durch den Kontakt einer Abschlußkante (24) mit einer Auflagefläche (25) gebildet wird, daß die Abschlußkante (24) entweder an der konkaven Formmatrize (20) oder am Abschluß- oder Dichtungsring (22) ausgebildet ist, während die Anschlagfläche (25) am anderen dieser Organe ausgebildet ist.

2. Formvorrichtung nach Anspruch 1, dadurch gekennzeichnet, daß die Abschlußkante (24) an der konkaven Formmatrize (20) ausgebildet ist und die Auflagefläche (25) am Abschluß- oder Dichtungsring (22).

3. Formvorrichtung nach einem der Ansprüche 1 oder 2, dadurch gekennzeichnet, daß sich die Auflagefläche (25) radial über die Abschlußkante (24) hinaus erstreckt.

4. Formvorrichtung nach einem der Ansprüche 1 bis 3, dadurch gekennzeichnet, daß gegenüber der Abschlußkante (24) die Auflagefläche (25) eine konkave Zone (36) aufweist.

5. Formvorrichtung nach Anspruch 4, dadurch gekennzeichnet, daß die konkave Zone (36) der Auflagefläche (25) ringförmig ausgebildet ist und daß die Abschlußkante (24) eine ringförmige konkave Kante 37 aufweist, wobei deren Krümmungsradius $(R_2)$ im wesentlichen gleich dem Krümmungsradius $(R_1)$ der ringförmigen Fläche (36) der Auflagefläche (25) ist.

6. Formvorrichtung nach einem der Ansprüche 1 bis 5, dadurch gekennzeichnet, daß die Oberfläche des Abschluß- oder Dichtungsteiles (22), die an der Begrenzung des Formhohlraumes (19) teilnimmt, durch einen Oberflächenabschnitt gebildet wird, deren Geometrie eben ist, konisch, kugelförmig, wulst-, kreisring- oder torusförmig, oder eine Folge derartiger Oberflächenteile ist.

7. Formvorrichtung nach einem der Ansprüche 1 bis 6, bei dem die Oberfläche des ringförmigen Abschlusses oder der ringförmigen Dichtung (22) zur Begrenzung des Formhohlraumes (19) dient, und sich zwischen den Umfängen ($D_1$, $D_2$) dieses Formhohlraumes (19) erstreckt, dadurch gekennzeichnet, daß die Umfänge der Formmatrizen (20, 21) unterschiedliche Durchmesser aufweisen.

8. Formvorrichtung nach einem der Ansprüche 1 bis 7, dadurch gekennzeichnet, daß die ringförmige Dichtung (22) unmittelbar die konvexe Formmatrize (21) umgibt.

9. Formvorrichtung nach Anspruch 8, dadurch gekennzeichnet, daß die ringförmige Dichtung (22) an einem Mantel (29) angebracht ist, der auf der konvexen Formmatrize (21) sitzt.

10. Formvorrichtung nach einem der Ansprüche 1 bis 7, dadurch gekennzeichnet, daß der ringförmige Anschluß oder die ringförmige Abdichtung (22) einen einteiligen Bauteil mit der konvexen Formmatrize (21) bildet.

11. Formvorrichtung nach einem der Ansprüche 8 oder 9, dadurch gekennzeichnet, daß die ringförmige Dichtung oder der ringförmige Abschluß (22) ein Mantel (39) ist, der auf der konkaven Formmatrize sitzt.

FIG.1

FIG.2

FIG.3

FIG.4

FIG.5

FIG.6

FIG.7

FIG.8

0 003 695

FIG. 9

FIG. 10

FIG. 11